# EUROPEAN PATENT APPLICATION

(11) **EP 4 835 793 A1**
(43) Date of publication of application: **04.11.2026**
(21) Application number: 25747528.5
(22) Date of filing: 15.01.2025
(51) Int. Cl.: G06Q 30/0251

(54) **MATERIAL SCHEDULING METHOD AND APPARATUS, AND DEVICE AND STORAGE MEDIUM**

(30) Priority: 31.01.2024 CN 202410138245
(71) Applicant: Hanshow Technology Co., Ltd., Jiaxing, Zhejiang 314000 (CN)
(72) Inventor: LIU, Futao, Jiaxing, Zhejiang 314000 (CN); SHAO, Wenlong, Jiaxing, Zhejiang 314000 (CN); HOU, Shiguo, Jiaxing, Zhejiang 314000 (CN); GUO, Lin, Jiaxing, Zhejiang 314000 (CN)
(74) Representative: Brunazzi, Stefano
(86) International application number: PCT/CN2025/072386
(87) International publication number: WO 2025/161952

(57) **Abstract**

Provided are a material scheduling method and apparatus, a device and a storage medium. The method includes: determining a to-be-scheduled material set for a target time period, where the target time period includes a special time period and a normal time period (S110); determining at least one of the following from the to-be-scheduled material set: a special material set for the special time period or a normal material set for the normal time period (S120); sorting at least one of the following within the special time period according to playback priorities of special materials in the special material set to obtain a first material schedule table: the special materials in the special material set or normal materials in the normal material set (S130); scheduling the normal materials in the normal material set within the normal time period according to playback priorities of the normal materials in the normal material set to obtain a second material schedule table (S 140); and obtaining a target material schedule table according to at least one of the first material schedule table or the second material schedule table (S150).

## Description

The present application claims priority to Chinese Patent Application No. 202410138245.4 filed with the China National Intellectual Property Administration (CNIPA) on Jan. 31, 2024, the disclosure of which is incorporated herein by reference in its entirety.

### TECHNICAL FIELD

Embodiments of the present application relate to the field of material delivery technology in computer technology, for example, a material scheduling method and apparatus, a device and a storage medium.

### BACKGROUND

In recent years, the public has gradually accepted electronic advertising as a form of advertisement, and the devices for playing electronic advertisements have become widespread in various public places such as shopping malls and supermarkets.

Since the playback of electronic advertisements is implemented by screen projection devices at the media side (for example, supermarkets or stores) according to a pre-established advertising schedule, it is only possible to play the electronic advertisements after the advertising schedule is properly made. The term "schedule" refers to the time arrangement for playing advertisements. However, screen projection devices in places such as shopping malls and supermarkets are required not only to play advertising content from external advertisers but also to play self-promotional content from the shopping malls or supermarkets themselves. As a result, the advertising content to be played becomes extremely numerous, and accordingly, generating a schedule list becomes more complicated.

In the related art, the screen projection devices at the media side impose no restrictions on the advertisements to be played and may play advertising content from advertisers or self-promotional content from shopping malls or supermarkets at random, thereby leading to uneven playback content. For example, the same advertisement from an advertiser may be played consecutively multiple times, thereby resulting in waste of delivery traffic while also giving users a poor viewing experience.

### SUMMARY

The present application provides a material scheduling method and apparatus, a device and a storage medium to ensure the reliability and rationality of material scheduling.

According to a first aspect of the present application, a material scheduling method is provided. The method includes the steps described below.

A to-be-scheduled material set for a target time period is determined, where the target time period includes a special time period and a normal time period.

At least one of the following is determined from the to-be-scheduled material set: a special material set for the special time period or a normal material set for the normal time period.

At least one of the following is sorted within the special time period according to playback priorities of special materials in the special material set to obtain a first material schedule table: the special materials in the special material set or normal materials in the normal material set.

The normal materials in the normal material set are scheduled within the normal time period according to playback priorities of the normal materials in the normal material set to obtain a second material schedule table.

A target material schedule table is obtained according to at least one of the first material schedule table or the second material schedule table.

According to another aspect of the present application, a material scheduling apparatus is provided. The apparatus includes a material determining module, a material screening module, a first material scheduling module, a second material scheduling module and a schedule table determining module.

The material determining module is configured to determine a to-be-scheduled material set for a target time period, where the target time period includes a special time period and a normal time period.

The material screening module is configured to determine at least one of the following from the to-be-scheduled material set: a special material set for the special time period or a normal material set for the normal time period.

The first material scheduling module is configured to sort at least one of the following within the special time period according to playback priorities of special materials in the special material set to obtain a first material schedule table: the special materials in the special material set or normal materials in the normal material set.

The second material scheduling module is configured to schedule the normal materials in the normal material set within the normal time period according to playback priorities of the normal materials in the normal material set to obtain a second material schedule table.

The schedule table determining module is configured to obtain a target material schedule table according to at least one of the first material schedule table or the second material schedule table.

According to another aspect of the present application, an electronic device is provided. The electronic device includes one or more processors and a memory.

The memory is configured to store one or more programs.

When executed by the one or more processors, the one or more programs cause the one or more processors to perform the material scheduling method provided by the present application.

According to another aspect of the present application, a computer-readable storage medium is provided. The computer-readable storage medium is configured to store a computer program which, when executed by a processor, causes the processor to perform the material scheduling method provided by the present application.

### BRIEF DESCRIPTION OF DRAWINGS

FIG. 1 is a flowchart of a material scheduling method according to an embodiment of the present application.
FIG. 2 is a flowchart of a material scheduling method according to another embodiment of the present application.
FIG. 3 is a structure diagram of a material scheduling apparatus according to an embodiment of the present application.
FIG. 4 is a structure diagram of an electronic device for performing the material scheduling method according to an embodiment of the present application.

### DETAILED DESCRIPTION

It is to be noted that the terms "first", "second" and the like in the specification, claims and drawings of the present application are used for distinguishing between similar objects and are not necessarily used for describing a particular sequence or order. It is to be understood that data so used can be interchanged under appropriate circumstances so that the embodiments of the present application described herein can be implemented in an order not illustrated or described herein. In addition, the terms "include", "comprise", "have" and any variations thereof are intended to encompass a non-exclusive inclusion. For example, a process, method, system, product or device that includes a series of steps or units not only includes the expressly listed steps or units but may also include other steps or units that are not expressly listed or are inherent to such a process, method, system, product or device.

Furthermore, it is to be further noted that in the technical solutions of the present application, the acquisition, storage, use, processing, transmission, provision and disclosure of relevant data involved such as the target time period and the to-be-scheduled material set are in compliance with relevant laws and regulations and do not violate public order and good customs.

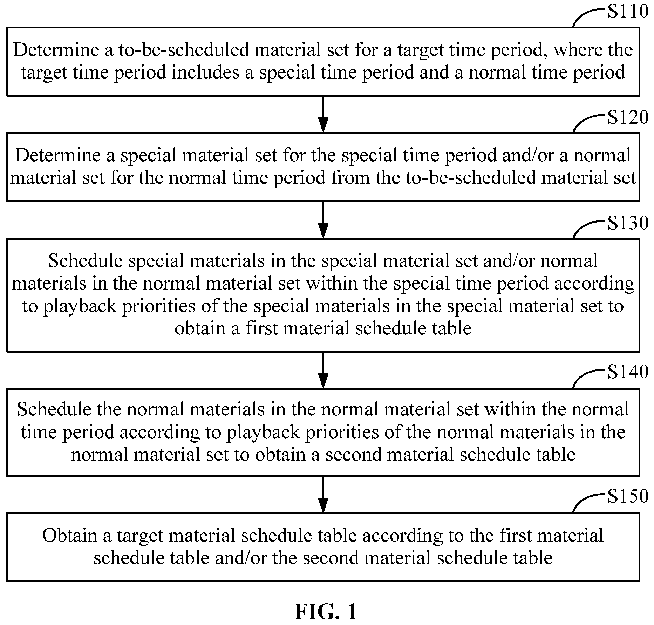

FIG. 1 is a flowchart of a material scheduling method according to an embodiment of the present application. This embodiment is applicable to the scenario of scheduling advertising materials to be played and may be performed by a material scheduling apparatus. The material scheduling apparatus may be implemented in the form of hardware and/or software and may be configured in a computer device, such as a server. As shown in FIG. 1, the method includes S110 to S150.

In S110, a to-be-scheduled material set for a target time period is determined, where the target time period includes a special time period and a normal time period.

The target time period refers to a time interval during which the advertising materials to be played need to be scheduled. The to-be-scheduled material set refers to the advertising materials that require scheduling. The special time period refers to a time interval for playing specific advertising materials. The normal time period refers to a time interval within which advertising materials are normally played.

It is to be noted that the division between the special time period and the normal time period is manually set according to the actual situation or based on experience. For example, the target time period is from 0:00 to 24:00 on Monday, the special time period is from 9:00 to 21:00 on Monday, and the normal time period is from 0:00 to 9:00 and 21:00 to 24:00 on Monday.

Data cleaning is performed on a current unscheduled material set to obtain the to-be-scheduled material set within the target time period.

The current unscheduled material set refers to all advertising materials currently waiting to be scheduled. Data cleaning refers to screening the current materials to remove invalid advertising materials.

For example, the current unscheduled material set includes unscheduled material sets of Monday, Tuesday and Friday, and the target time period is Monday. The unscheduled material sets for Tuesday and Friday in the current unscheduled material set are discarded, and the unscheduled materials for Monday are taken as the to-be-scheduled material set for the target time period.

In S120, a special material set for the special time period and/or a normal material set for the normal time period are determined from the to-be-scheduled material set.

The special material set refers to a material set containing advertising materials with specific billing methods and may include at least one of play count based advertising materials or time slot based advertising materials. The normal material set refers to a set of advertising materials that are not dependent on specific billing methods.

For example, for play count based advertising materials, there is only a requirement on the number of playbacks. If there is also a requirement on the playback time period, the play count based advertising materials may be scheduled within the required time period to fulfill the required number of playbacks. If there is no requirement on the playback time period, the play count based advertising materials may be scheduled within any time period to fulfill the required number of playbacks. For example, if a certain play count based advertising material is required to be played 100 times within the required time period from 9:00 to 21:00, the play count based advertising material may be evenly scheduled as much as possible within the time period from 9:00 to 21:00 to complete the 100 playbacks. If the play count based advertising material only requires 100 playbacks and has no requirement on the playback time period, the play count based advertising material may be scheduled within any time period until the 100 playbacks are completed.

For example, for time slot based advertising materials, there is only a requirement on the playback time period. The time slot based advertising materials may only need to be scheduled and played within a required time period. There is no requirement for the number of playbacks. For example, if a certain time slot based advertising material is required to be played within the time period from 9:00 to 13:00, the time slot based advertising material may only be scheduled and played within the time period from 9:00 to 13:00 and cannot be scheduled and played in any time period other than the time period from 9:00 to 13:00.

For example, the to-be-scheduled material set is screened. The advertising materials with specific billing methods are aggregated to obtain the special material set for the special time period; and/or, the advertising materials that are independent of specific billing methods are aggregated to obtain the normal material set for the normal time period.

In S130, special materials in the special material set and/or normal materials in the normal material set are scheduled within the special time period according to playback priorities of the special materials in the special material set to obtain a first material schedule table.

The playback priority refers to the degree or order that determines the relative importance or urgency of a material to be played in the to-be-scheduled material set. The first material schedule table refers to a material schedule table for the special time period.

It is to be noted that the playback priority is manually set according to the actual situation or based on experience. For example, based on the creation moments of the materials, materials created earlier have higher priorities, and materials created later have lower priorities.

For example, according to the playback priorities of the special materials and/or normal materials, the special materials in the special material set and/or the normal materials in the normal material set are scheduled within the special time period in descending order of priority to obtain the first material schedule table.

In S140, the normal materials in the normal material set are scheduled within the normal time period according to playback priorities of the normal materials in the normal material set to obtain a second material schedule table.

The second material schedule table refers to a material schedule table for the normal time period.

For example, according to the playback priorities of the normal materials in the normal material set, the normal materials in the normal material set are scheduled within the normal time period in descending order of priority to obtain the second material schedule table.

In S150, a target material schedule table is obtained according to the first material schedule table and/or the second material schedule table.

The target material schedule table refers to a schedule table obtained by scheduling and arranging the to-be-scheduled material set within the target time period.

For example, if only the special material set exists in the to-be-scheduled material set, the first material schedule table is taken as the target material schedule table. If only the normal material set exists in the to-be-scheduled material set, the second material schedule table is taken as the target material schedule table. If both the normal material set and the special material set exist in the to-be-scheduled material set, the first material schedule table and the second material schedule table are integrated in chronological order to obtain the target material schedule table.

If the special material set exists in the to-be-scheduled material set, the target material schedule table may only be set to one page. If the special material set does not exist in the to-be-scheduled material set, the target material schedule table may be set to one page or two pages.

A page refers to a page on the display interface of a device and is used for presenting advertising content or other media materials. One device may be configured with at most two pages, and each page may be used to present multiple materials.

If the special material set does not exist in the to-be-scheduled material set, that is, all the to-be-scheduled materials are normal materials, scheduling is performed on the to-be-scheduled material set within the target time period according to the playback priorities in the to-be-scheduled material set to obtain the target material schedule table.

After the scheduling of all the to-be-scheduled materials is completed, if there is a remaining duration in the target time period, the to-be-scheduled materials are cyclically scheduled within the remaining duration.

In this embodiment of the present application, a to-be-scheduled material set for a target time period is determined, where the target time period includes a special time period and a normal time period; a special material set for the special time period and/or a normal material set for the normal time period are determined from the to-be-scheduled material set; special materials in the special material set and/or normal materials in the normal material set are scheduled within the special time period according to playback priorities of the special materials in the special material set to obtain a first material schedule table; the normal materials in the normal material set are scheduled within the normal time period according to playback priorities of the normal materials in the normal material set to obtain a second material schedule table; and a target material schedule table is obtained according to the first material schedule table and/or the second material schedule table. The above-mentioned distinguishing technical features help to ensure the reliability and rationality of material scheduling.

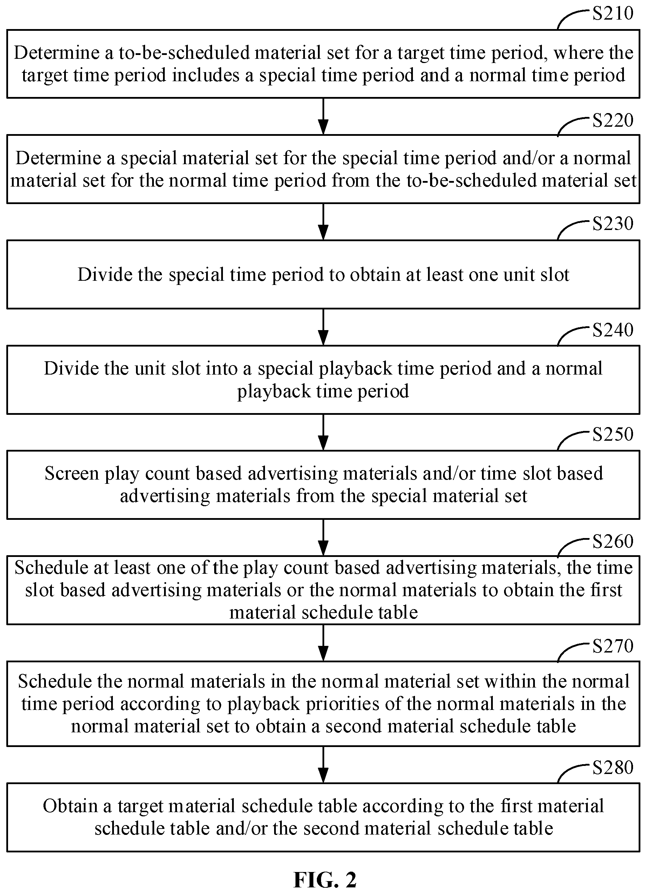

FIG. 2 is a flowchart of a material scheduling method according to another embodiment of the present application. In this embodiment, on the basis of the technical solutions of the multiple embodiments described above, the step where the special materials in the special material set and/or the normal materials in the normal material set are scheduled within the special time period according to the playback priorities of the special materials in the special material set to obtain the first material schedule table is refined into the following steps: the special time period is divided to obtain at least one unit slot; the unit slot is divided into a special playback time period and a normal playback time period; play count based advertising materials and/or time slot based advertising materials are screened from the special material set; and at least one of the play count based advertising materials, the time slot based advertising materials or the normal materials is scheduled to obtain the first material schedule table. It is to be noted that for the content not described in this embodiment of the present application, reference may be made to related descriptions in other embodiments. As shown in FIG. 2, the method includes S210 to S280.

In S210, a to-be-scheduled material set for a target time period is determined, where the target time period includes a special time period and a normal time period.

In S220, a special material set for the special time period and/or a normal material set for the normal time period are determined from the to-be-scheduled material set.

In S230, the special time period is divided to obtain at least one unit slot.

The unit slot is used to represent a specific time interval or time period, which may be a fixed-length time period or a dynamically adjustable time period as needed.

For example, the special time period is from 9:00 to 21:00. The special time period is divided into 360 parts, each part is 120 seconds, and 120 seconds here is the unit slot.

It is to be noted that multiple unit slots are consecutive in time; however, due to limitations such as material duration, a unit slot may actually be less than or equal to 120 seconds, and in this case, the subsequent unit slots will be shifted forward in time.

In S240, the unit slot is divided into a special playback time period and a normal playback time period.

The special playback time period refers to a time period for playing specific materials in a unit slot. The normal playback time period refers to a time period for playing normal materials in a unit slot.

For example, the unit slot is 120 seconds; the unit slot is evenly divided to obtain a special playback time period of 60 seconds and a normal playback time period of 60 seconds.

In S250, play count based advertising materials and/or time slot based advertising materials are screened from the special material set.

If the special material set contains only play count based advertising materials or time slot based advertising materials, no screening is required, and the materials may be scheduled directly. If the special material set contains both play count based advertising materials and time slot based advertising materials, the special material set is screened to distinguish the play count based advertising materials from the time slot based advertising materials, thereby facilitating subsequent material scheduling.

In S260, at least one of the play count based advertising materials, the time slot based advertising materials or the normal materials is scheduled to obtain the first material schedule table.

For example, if the special material set contains only the play count based advertising materials, the play count based advertising materials and the normal materials are scheduled to obtain the first material schedule table. If the special material set neither includes the play count based advertising materials nor the time slot based advertising materials, the normal materials are scheduled to obtain the first material schedule table. If the special material set contains both the play count based advertising materials and the time slot based advertising materials, the play count based advertising materials, the time slot based advertising materials and the normal materials are scheduled to obtain the first material schedule table.

The step where the play count based advertising materials, the time slot based advertising materials and the normal materials are scheduled to obtain the first material schedule table may include the following steps: the play count based advertising materials are scheduled within the special playback time period according to playback priorities of the play count based advertising materials to obtain a play count based advertising schedule table; the time slot based advertising materials are scheduled within the special playback time period according to playback priorities of the time slot based advertising materials to obtain a time slot based advertising schedule table; the normal materials are scheduled within the normal playback time period according to the playback priorities of the normal materials in the normal material set to obtain a normal schedule table; a unit schedule table is determined according the play count based advertising schedule table, the time slot based advertising schedule table and the normal schedule table; and the first material schedule table is determined according to a unit schedule table of at least one unit slot.

The play count based advertising schedule table refers to the schedule table corresponding to the play count based advertising materials in the unit slot currently being scheduled. The time slot based advertising schedule table refers to the schedule table corresponding to the time slot based advertising materials in the unit slot currently being scheduled. The normal schedule table refers to the schedule table corresponding to the normal materials in the unit slot currently being scheduled. The unit schedule table refers to the schedule table corresponding to the unit slot currently being scheduled.

For example, according to the playback priorities of the play count based advertising materials, tasks that meet the conditions are added to the special playback time period of the unit slot in descending order from the play count based advertising priority queue to obtain the play count based advertising schedule table. If there is remaining time in the special playback time period, according to the playback priorities of the time slot based advertising materials, tasks that meet the conditions are added to the special playback time period of the unit slot in descending order from the time slot based advertising priority queue to obtain the time slot based advertising schedule table. According to the playback priorities of the normal materials in the normal material set, tasks that meet the conditions are added to the normal playback time period of the unit slot in descending order from the normal material priority queue to obtain the normal material schedule table.

After the unit schedule table is determined according to the play count based advertising schedule table, the time slot based advertising schedule table and the normal schedule table, if a remaining unit scheduling duration exists in the unit slot, scheduling is performed on a next unit slot of the unit slot within the remaining unit scheduling duration.

The remaining unit scheduling duration refers to a time period in the current unit slot where the scheduling cannot be performed.

For example, if the normal playback time period of the current unit slot is insufficient to play one normal material task, or if all material tasks of the current unit slot have been scheduled and there is remaining unscheduled time in the current unit slot, the scheduling task for the next unit slot is directly started.

A total remaining scheduling duration of the special time period is determined, and materials corresponding to the special time period are cyclically scheduled within the total remaining scheduling duration.

The total remaining scheduling duration refers to the sum of the remaining unit-slot scheduling durations after all unit slots have been scheduled, that is, the remaining unscheduled duration after all time units within the special time period have been scheduled.

For example, when all unit slots have been scheduled and there is remaining time in the special time period, the total remaining scheduling duration of the special time period is determined. Within the total remaining scheduling duration, scheduling is performed sequentially according to a first scheduling order: play count based advertising materials that meet play count based advertising playback conditions, time slot based advertising materials that meet time slot based advertising playback conditions, and normal playback materials that meet normal material playback conditions. If there is remaining duration after all materials have been scheduled, cyclic scheduling is performed according to the first scheduling order until the total remaining scheduling duration is fully exhausted.

The play count based advertising playback condition refers to a condition under which play count based advertising materials can be scheduled for playback. The play count based advertising playback condition may be that the number of times that the play count based advertising materials have been played currently is less than the number of times that the play count based advertising materials are required to be played and that there is remaining time in the special playback time period. The time slot based advertising playback condition refers to a condition under which time slot based advertising materials can be scheduled for playback. The time slot based advertising playback condition may be that the current scheduling time falls within a time period in which time slot based advertising materials can be played and that there is remaining time in the special playback time period. The normal material playback condition refers to a condition under which normal materials can be scheduled for playback. The normal material playback condition may be that the current scheduling time falls within a time period in which normal materials can be played and that the playback duration of the normal materials is less than or equal to the remaining time of the normal playback time period.

It is to be noted that, when the total remaining scheduling duration is fully exhausted and the playback duration of the last material is longer than the remaining scheduling duration, the special time period may be extended to allow the last material to be played completely.

The material playback duration of the play count based advertising materials and/or the material playback duration of the time slot based advertising materials are determined. A duration difference is determined according to the material playback duration and a special duration of the special playback time period. If the duration difference is less than or equal to a duration threshold, a to-be-scheduled special material within the normal playback time period is determined, where the to-be-scheduled special material includes a to-be-scheduled play count based advertising material and/or a to-be-scheduled time slot based advertising material. The to-be-scheduled special material is scheduled within the normal playback time period. The duration difference is cut off from the normal playback time period to obtain a remaining normal playback time period, and the normal materials are scheduled within the remaining normal playback time period.

The material playback duration refers to the duration required to play the special materials within the special playback time period. The special duration refers to the duration of the special playback time period. The duration difference is a time value obtained by calculating the difference between the special duration and the material playback duration. The duration threshold is used to represent the maximum duration that the to-be-scheduled special material may occupy in the normal playback time period. The to-be-scheduled special material refers to a special material whose playback duration exceeds the remaining time of the special playback time period and whose playback duration needs to be extended. The remaining normal playback time period refers to the time period that remains available for scheduling after the normal playback time period is partially occupied by the to-be-scheduled special material.

For example, the unit slot is 120 seconds, where the special playback time period is 60 seconds (that is, the special duration is 60 seconds), and the normal playback time period is 60 seconds. The special playback time period is from the 1st second to the 60th second, and the normal playback time period is from the 61st second to the 120th second. The duration of the to-be-scheduled special material is 10 seconds, the material playback duration is 55 seconds, and the duration threshold is 5 seconds. Therefore, the duration difference is 5 seconds, and the to-be-scheduled special material starts playing at the 56th second of the unit slot. It can be seen that, within the 60-second special playback time period, after the first 55 seconds of the material playback duration is occupied, the remaining 5 seconds are insufficient to completely play the 10-second to-be-scheduled special material. Since the duration difference of 5 seconds is equal to the duration threshold of 5 seconds, the to-be-scheduled special material may occupy the first 5 seconds of the normal playback time period. That is, the to-be-scheduled special material starts playing at the 56th second of the special playback time period and ends at the 65th second that falls in the normal time period. If there are still special materials available for playback after the 65th second, these special materials will no longer occupy the normal playback time period; that is, scheduling of special materials stops.

If the duration difference is greater than the duration threshold, the remaining available duration of the special playback time period is determined; the remaining available duration is cut from the special playback time period and added to the normal playback time period to obtain an extended normal playback time period; and the normal materials are scheduled within the extended normal playback time period.

The remaining available duration refers to the duration that remains unused after the scheduling within the special playback time period is completed. The extended normal playback time period refers to the time period obtained by combining the remaining available duration with the original normal playback time period.

For example, the unit slot is 120 seconds, where the special playback time period is 60 seconds (that is, the special duration is 60 seconds), and the normal playback time period is 60 seconds. The special playback time period is from the 1st second to the 60th second, and the normal playback time period is from the 61st second to the 120th second. The duration of the to-be-scheduled special material is 10 seconds, the material playback duration is 55 seconds, and the duration threshold is 4 seconds. Therefore, the duration difference is 5 seconds, and the to-be-scheduled special material starts playing at the 56th second of the unit slot. It can be seen that, within the 60-second special playback time period, after the first 55 seconds of the material playback duration is occupied, the remaining 5 seconds are insufficient to completely play the 10-second to-be-scheduled special material. The first 5 seconds of the normal playback time period are required for the full playback of the 10-second to-be-scheduled special material. Since the duration difference of 5 seconds is greater than the duration threshold of 4 seconds, scheduling of special materials stops. The remaining available duration of 5 seconds in the special playback time period is added to the normal playback time period, that is, the normal playback period is extended to 65 seconds (from the 56th second to the 120th second). The normal materials are scheduled within the extended normal playback time period.

If a remaining normal unit duration exists in the normal playback time period, the normal materials are cyclically scheduled within the remaining normal unit duration.

The remaining normal unit duration refers to the duration that remains in the normal playback time period of the time slot after the scheduling of the normal materials is completed.

It is to be noted that the scheduling being completed means that the scheduling of all normal materials within the normal playback time period is completed, or the remaining duration of the normal playback time period is less than the playback duration of the next to-be-scheduled normal material.

In S270, the normal materials in the normal material set are scheduled within the normal time period according to playback priorities of the normal materials in the normal material set to obtain a second material schedule table.

After the normal materials in the normal material set are scheduled within the normal time period, if a remaining duration exists in the normal time period, the normal materials in the normal material set are cyclically scheduled according to the playback priorities of the normal materials in the normal material set until the normal time period is fully exhausted.

It is to be noted that if the duration of the last normal material scheduled within the normal time period is greater than the final remaining duration of the normal time period, the duration of the last normal material is compressed so that the playback duration of the last normal material equals the final remaining duration of the normal time period.

In S280, a target material schedule table is obtained according to the first material schedule table and/or the second material schedule table.

In this embodiment of the present application, a to-be-scheduled material set for a target time period is determined, where the target time period includes a special time period and a normal time period; a special material set for the special time period and/or a normal material set for the normal time period are determined from the to-be-scheduled material set; the special time period is divided to obtain at least one unit slot; the unit slot is divided into a special playback time period and a normal playback time period; play count based advertising materials and/or time slot based advertising materials are screened from the special material set; at least one of the play count based advertising materials, the time slot based advertising materials or the normal materials is scheduled to obtain the first material schedule table; the normal materials in the normal material set are scheduled within the normal time period according to playback priorities of the normal materials in the normal material set to obtain a second material schedule table; and a target material schedule table is obtained according to the first material schedule table and/or the second material schedule table. In the above-mentioned distinguishing technical features, the scheduling sequence of special materials and normal materials can be reasonably arranged by dividing the unit slot, thereby helping to ensure the reliability and rationality of material scheduling.

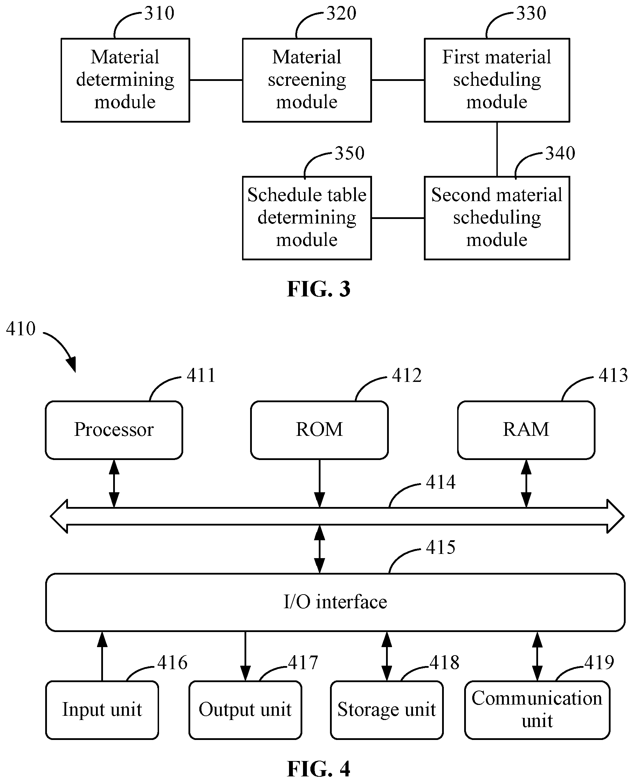

FIG. 3 is a structure diagram of a material scheduling apparatus according to an embodiment of the present application. The material scheduling apparatus is applicable to the scenario of scheduling advertising materials to be played. The material scheduling apparatus may be implemented in the form of hardware and/or software and may be configured in a computer device such as a server. As shown in FIG. 3, the apparatus includes a material determining module 310, a material screening module 320, a first material scheduling module 330, a second material scheduling module 340 and a schedule table determining module 350.

The material determining module 310 is configured to determine a to-be-scheduled material set for a target time period, where the target time period includes a special time period and a normal time period.

The material screening module 320 is configured to determine a special material set for the special time period and/or a normal material set for the normal time period from the to-be-scheduled material set.

The first material scheduling module 330 is configured to schedule the special materials in the special material set and/or normal materials in the normal material set within the special time period according to playback priorities of special materials in the special material set to obtain a first material schedule table.

The second material scheduling module 340 is configured to schedule the normal materials in the normal material set within the normal time period according to playback priorities of the normal materials in the normal material set to obtain a second material schedule table.

The schedule table determining module 350 is configured to obtain a target material schedule table according to the first material schedule table and/or the second material schedule table.

In this embodiment of the present application, a to-be-scheduled material set for a target time period is determined, where the target time period includes a special time period and a normal time period; a special material set for the special time period and/or a normal material set for the normal time period are determined from the to-be-scheduled material set; special materials in the special material set and/or normal materials in the normal material set are scheduled within the special time period according to playback priorities of the special materials in the special material set to obtain a first material schedule table; the normal materials in the normal material set are scheduled within the normal time period according to playback priorities of the normal materials in the normal material set to obtain a second material schedule table; and a target material schedule table is obtained according to the first material schedule table and/or the second material schedule table. The above-mentioned distinguishing technical features help to ensure the reliability and rationality of material scheduling.

The first material scheduling module 330 includes a time period dividing unit, a unit slot dividing unit, a material screening unit and a material scheduling unit.

The time period dividing unit is configured to divide the special time period to obtain at least one unit slot.

The unit slot dividing unit is configured to divide the unit slot into a special playback time period and a normal playback time period.

The material screening unit is configured to screen play count based advertising materials and/or time slot based advertising materials from the special material set.

The material scheduling unit is configured to schedule at least one of the play count based advertising materials, the time slot based advertising materials or the normal materials to obtain the first material schedule table.

The material scheduling unit includes a first material scheduling sub-unit, a second material scheduling sub-unit, a third material scheduling sub-unit, a unit schedule table determining sub-unit and a material schedule table determining sub-unit.

The first material scheduling sub-unit is configured to schedule the play count based advertising materials within the special playback time period according to playback priorities of the play count based advertising materials to obtain a play count based advertising schedule table.

The second material scheduling sub-unit is configured to schedule the time slot based advertising materials within the special playback time period according to playback priorities of the time slot based advertising materials to obtain a time slot based advertising schedule table.

The third material scheduling sub-unit is configured to schedule the normal materials within the normal playback time period according to the playback priorities of the normal materials in the normal material set to obtain a normal schedule table.

The unit schedule table determining sub-unit is configured to determine a unit schedule table according to the play count based advertising schedule table, the time slot based advertising schedule table and the normal schedule table.

The material schedule table determining sub-unit is configured to determine the first material schedule table according to the unit schedule table of at least one unit slot.

The material scheduling unit is configured to
determine the material playback duration of the play count based advertising materials and/or the material playback duration of the time slot based advertising materials;
determine a duration difference according to the material playback duration and a special duration of the special playback time period;
if the duration difference is less than or equal to a duration threshold, determine a to-be-scheduled special material within the normal playback time period, where the to-be-scheduled special material includes a to-be-scheduled play count based advertising material and/or a to-be-scheduled time slot based advertising material;
schedule the to-be-scheduled special material within the normal playback time period; and
cut off the duration difference from the normal playback time period to obtain a remaining normal playback time period and schedule the normal materials within the remaining normal playback time period.

The unit schedule table determining sub-unit is further configured to, after the unit schedule table is determined according to the play count based advertising schedule table, the time slot based advertising schedule table and the normal schedule table, if a remaining unit scheduling duration exists in the unit slot, perform scheduling on a next unit slot of the unit slot within the remaining unit scheduling duration.

The material scheduling unit further includes a fourth material scheduling sub-unit.

The fourth material scheduling sub-unit is configured to determine a total remaining scheduling duration of the special time period and cyclically schedule materials corresponding to the special time period within the total remaining scheduling duration.

The third material scheduling sub-unit is further configured to, after the normal materials are scheduled within the normal playback time period, if a remaining normal unit duration exists in the normal playback time period, cyclically schedule the normal materials within the remaining normal unit duration.

The material scheduling apparatus provided in this embodiment of the present application may perform the material scheduling method provided in any embodiment of the present application and has corresponding functional modules for performing multiple material scheduling methods and corresponding beneficial effects.

FIG. 4 is a structure diagram of an electronic device 410 for performing the material scheduling method according to an embodiment of the present application. The electronic device is intended to represent various forms of digital computers, such as laptop computers, desktop computers, worktables, personal digital assistants, servers, blade servers, mainframe computers, and other suitable computers. The electronic device may also represent various forms of mobile apparatuses, such as personal digital processing apparatuses, cellular phones, smart phones, wearable devices (such as helmets, glasses, watches, etc.), and other similar computing apparatuses. The components shown herein, their connections and relationships, and their functions are only illustrative and are not intended to limit the implementation of the present application as described and/or claimed herein.

As shown in FIG. 4, the electronic device 410 includes at least one processor 411 and a memory communicatively connected to the at least one processor 411, for example, a read-only memory (ROM) 412 or a random-access memory (RAM) 413. The memory stores a computer program executable by the at least one processor. The processor 411 may perform various suitable actions and processing in accordance with the computer program stored in the ROM 412 or the computer program loaded into the RAM 413 from a storage unit 418. Various programs and data required for the operation of the electronic device 410 may also be stored in the RAM 413. The processor 411, the ROM 412 and the RAM 413 are connected to each other through a bus 414. An input/output (I/O) interface 415 is also connected to the bus 414.

Multiple components in the electronic device 410 are connected to the I/O interface 415, including: an input unit 416 such as a keyboard or a mouse; an output unit 417 such as various types of displays or loudspeakers; the storage unit 418 such as a magnetic disk or an optical disk; and a communication unit 419 such as a network card, a modem or a wireless communication transceiver. The communication unit 419 allows the electronic device 410 to exchange information/data with other devices over a computer network such as the Internet and/or various telecommunications networks.

The processor 411 may be various general-purpose and/or special-purpose processing components having processing and computing capabilities. Examples of the processor 411 include, but are not limited to, a central processing unit (CPU), a graphics processing unit (GPU), various special-purpose artificial intelligence (AI) computing chips, various processors executing machine learning models and algorithms, a digital signal processor (DSP), and any suitable processor, controller and microcontroller. The processor 411 performs the various methods and processing described above, for example, the material scheduling method.

In some embodiments, the material scheduling method may be implemented as computer programs tangibly contained in a computer-readable storage medium such as the storage unit 418. In some embodiments, part or all of computer programs may be loaded and/or installed onto the electronic device 410 via the ROM 412 and/or the communication unit 419. When the computer programs are loaded into the RAM 413 and executed by the processor 411, one or more steps of the material scheduling method described above may be performed. Alternatively, in other embodiments, the processor 411 may be configured, in any other suitable manner (for example, by means of firmware), to perform the material scheduling method.

Herein, various embodiments of the preceding systems and techniques may be implemented in digital electronic circuitry, integrated circuitry, field-programmable gate arrays (FPGAs), application-specific integrated circuits (ASICs), application-specific standard products (ASSPs), systems on chips (SoCs), complex programmable logic devices (CPLDs), computer hardware, firmware, software, and/or combinations thereof. These embodiments may include implementations in one or more computer programs. The one or more computer programs may be executable and/or interpretable on a programmable system including at least one programmable processor. The programmable processor may be a special-purpose or general-purpose programmable processor for receiving data and instructions from a memory system, at least one input apparatus and at least one output apparatus and transmitting the data and instructions to the memory system, the at least one input apparatus and the at least one output apparatus.

Computer programs for the implementation of the methods of the present application may be written in one programming language or any combination of multiple programming languages. These computer programs may be provided for a processor of a general-purpose computer, a special-purpose computer or another programmable material scheduling apparatus, such that when executed by the processor, the computer programs cause the functions/operations specified in the flowcharts and/or block diagrams to be performed. The computer programs may be executed entirely on a machine, executed partly on a machine, executed as a standalone software package, executed partly on a machine and partly on a remote machine, or executed entirely on a remote machine or a server.

In the context of the present application, the computer-readable storage medium may be a tangible medium that may include or store a computer program used by or used in conjunction with an instruction execution system, apparatus or device. The computer-readable storage medium may include, but is not limited to, an electronic, magnetic, optical, electromagnetic, infrared, or semiconductor system, apparatus or device or any suitable combination thereof. Alternatively, the computer-readable storage medium may be a machine-readable signal medium. More specific examples of the machine-readable storage medium may include an electrical connection based on one or more wires, a portable computer disk, a hard disk, a random-access memory (RAM), a read-only memory (ROM), an erasable programmable read-only memory (EPROM), a flash memory, an optical fiber, a portable compact disc read-only memory (CD-ROM), an optical memory device, a magnetic memory device, or any suitable combination thereof. The computer-readable storage medium may be a non-transient computer-readable storage medium.

In order to provide for user interaction, the systems and techniques described herein may be implemented on an electronic device. The electronic device has a display apparatus (for example, a cathode-ray tube (CRT) or a liquid-crystal display (LCD) monitor) for displaying information to the user and a keyboard and a pointing apparatus (for example, a mouse or a trackball) through which the user can provide input for the electronic device. Other types of apparatuses may also be used for providing interaction with the user. For example, feedback provided for the user may be sensory feedback in any form (for example, visual feedback, auditory feedback or tactile feedback); and input from the user may be received in any form (including acoustic input, voice input, or tactile input).

The systems and techniques described herein may be implemented in a computing system including a back-end component (for example, as a data server), a computing system including a middleware component (for example, an application server), a computing system including a front-end component (for example, a client computer having a graphical user interface or a web browser through which the user can interact with the implementations of the systems and techniques described herein), or a computing system including any combination of such back-end, middleware, or front-end components. Components of the system may be interconnected by any form or medium of digital data communication (for example, a communication network). Examples of the communication network include a local area network (LAN), a wide area network (WAN), a blockchain network, and the Internet.

The computing system may include clients and servers. The client and the server are generally remote from each other and typically interact through a communication network. The relationship between the client and the server arises by virtue of computer programs running on respective computers and having a client-server relationship with each other. The server may be a cloud server, also referred to as a cloud computing server or a cloud host. As a host product in a cloud computing service system, the server solves the defects of difficult management and weak service scalability in conventional physical hosts and virtual private server (VPS) services.

It is to be understood that various forms of the preceding flows may be used with steps reordered, added, or removed. For example, the steps described in the present application may be executed in parallel, in sequence or in a different order as long as the desired results of the technical solutions in the present application are achieved, which is not limited herein.

## Claims

1. A material scheduling method, comprising:
determining a to-be-scheduled material set for a target time period, wherein the target time period comprises a special time period and a normal time period;
determining at least one of the following from the to-be-scheduled material set: a special material set for the special time period or a normal material set for the normal time period;
sorting at least one of the following within the special time period according to playback priorities of special materials in the special material set to obtain a first material schedule table: the special materials in the special material set or normal materials in the normal material set;
scheduling the normal materials in the normal material set within the normal time period according to playback priorities of the normal materials in the normal material set to obtain a second material schedule table; and
obtaining a target material schedule table according to at least one of the first material schedule table or the second material schedule table.

2. The method according to claim 1, wherein sorting at least one of the following within the special time period according to the playback priorities of the special materials in the special material set to obtain the first material schedule table: the special materials in the special material set or the normal materials in the normal material set comprises:
dividing the special time period to obtain at least one unit slot;
dividing each unit slot among the at least one unit slot into a special playback time period and a normal playback time period;
screening at least one of the following from the special material set: play count based advertising materials or time slot based advertising materials; and
scheduling at least one of the play count based advertising materials, the time slot based advertising materials or the normal materials to obtain the first material schedule table.

3. The method according to claim 2, wherein scheduling at least one of the play count based advertising materials, the time slot based advertising materials or the normal materials to obtain the first material schedule table comprises:
scheduling the play count based advertising materials within the special playback time period according to playback priorities of the play count based advertising materials to obtain a play count based advertising schedule table;
scheduling the time slot based advertising materials within the special playback time period according to playback priorities of the time slot based advertising materials to obtain a time slot based advertising schedule table;
scheduling the normal materials within the normal playback time period according to the playback priorities of the normal materials in the normal material set to obtain a normal schedule table;
determining a unit schedule table according the play count based advertising schedule table, the time slot based advertising schedule table and the normal schedule table; and
obtaining the first material schedule table according to a unit schedule table of the at least one unit slot.

4. The method according to claim 2, wherein scheduling at least one of the play count based advertising materials, the time slot based advertising materials or the normal materials comprises:
determining a material playback duration of at least one of the play count based advertising materials or the time slot based advertising materials;
determining a duration difference according to the material playback duration and a special duration of the special playback time period;
in response to determining that the duration difference is less than or equal to a duration threshold, determining a to-be-scheduled special material within the normal playback time period; wherein the to-be-scheduled special material comprises at least one of a to-be-scheduled play count based advertising material or a to-be-scheduled time slot based advertising material;
scheduling the to-be-scheduled special material within the normal playback time period; and
cutting off the duration difference from the normal playback time period to obtain a remaining normal playback time period, and scheduling the normal materials within the remaining normal playback time period.

5. The method according to claim 3, after determining the unit schedule table according the play count based advertising schedule table, the time slot based advertising schedule table and the normal schedule table, further comprising:
in response to determining that a remaining unit scheduling duration exists in the unit slot, performing scheduling on a next unit slot of the unit slot within the remaining unit scheduling duration.

6. The method according to claim 5, further comprising:
determining a total remaining scheduling duration of the special time period; and
cyclically scheduling materials corresponding to the special time period within the total remaining scheduling duration.

7. The method according to claim 3, after scheduling the normal materials within the normal playback time period, further comprising:
in response to determining that a remaining normal unit duration exists in the normal playback time period, cyclically scheduling the normal materials within the remaining normal unit duration.

8. A material scheduling apparatus, comprising:
a material determining module, configured to determine a to-be-scheduled material set for a target time period, wherein the target time period comprises a special time period and a normal time period;
a material screening module, configured to determine at least one of the following from the to-be-scheduled material set: a special material set for the special time period or a normal material set for the normal time period;
a first material scheduling module, configured to sort at least one of the following within the special time period according to playback priorities of special materials in the special material set to obtain a first material schedule table: the special materials in the special material set or normal materials in the normal material set;
a second material scheduling module, configured to schedule the normal materials in the normal material set within the normal time period according to playback priorities of the normal materials in the normal material set to obtain a second material schedule table; and
a schedule table determining module, configured to obtain a target material schedule table according to at least one of the first material schedule table or the second material schedule table.

9. An electronic device, comprising:
one or more processors; and
a memory, which is configured to store one or more programs;
wherein when executed by the one or more processors, the one or more programs cause the one or more processors to perform the material scheduling method according to any one of claims 1 to 7.

10. A computer-readable storage medium, which is configured to store a computer program which, when executed by a processor, causes the processor to perform the material scheduling method according to any one of claims 1 to 7.
